# FASCICULE DE BREVET EUROPEEN

(11) **EP 1 564 463 B1**
(45) Date de publication et mention de la délivrance du brevet: **12.12.2007**
(21) Numéro de dépôt: 05290102.2
(22) Date de dépôt: 18.01.2005
(51) Int. Cl.: F16K 21/06, F16K 31/363

(54) **Perfectionnements aux robinets temporisés à commande directe manuelle**
Verbesserungen an den Hähnen, die an manueller direkter Bedienung verzögert sind
Improvements in temporized taps with direct manual actuation

(30) Priorité: 10.02.2004 FR 0401243; 25.11.2004 FR 0412489
(43) Date de publication de la demande: 17.08.2005
(73) Titulaire: Les Robinets Presto Société Anonyme, 92120 Montrouge (FR)
(72) Inventeur: Dutheil, Daniel, 17132 Meshers (FR)
(74) Mandataire: Vander-Heym, Serge Henri Marcel

(56) Documents cités:
- EP-A- 0 333 526
- EP-A- 1 178 250
- FR-A- 2 459 930
- FR-A- 2 492 942
- FR-A- 2 497 555

## Description

La présente invention est relative à des perfectionnements aux robinets temporisés à commande directe manuelle, permettant de diminuer l'effort nécessaire à l'ouverture.

L'invention vise, tout particulièrement, un robinet selon lequel l'action manuelle sur un poussoir détermine le soulèvement du clapet porté par un piston obturant une chambre de temporisation communiquant avec l'arrivée d'eau par l'entremise d'un orifice calibré, ou orifice de temporisation. Durant l'écoulement de l'eau, une partie de celle-ci pénètre dans la chambre de temporisation, par l'orifice calibré, repousse le piston et applique le clapet contre son siège.

Un effort relativement important est nécessaire pour ouvrir le robinet puisqu'il faut vaincre la force due à la pression de l'eau et celle due au ressort de rappel du poussoir.

La meilleure solution, pour vaincre la force due à la pression de l'eau à l'intérieur de la chambre de temporisation, consiste à utiliser un dispositif à clapet de décharge. Un tel dispositif est décrit, notamment, dans le brevet français n° 2459930 du 26/06/1979. Ce dispositif se compose d'une tige axiale, reliée par une extrémité au poussoir, traversant librement le piston usuel qui constitue le siège d'un clapet auxiliaire porté par l'autre extrémité de ladite tige.

Outre le siège du clapet auxiliaire, ou de décharge, le piston comporte l'orifice calibré et son dispositif autonettoyant. Ce dispositif se compose d'une tige, traversant l'orifice calibré, portée par un ressort enroulé en hélice, l'écrasement dudit ressort provoquant le déplacement axial de ladite tige.

Ce dispositif autonettoyant prend alors place, de façon excentrée, entre le clapet de décharge et le joint périphérique à lèvre.

Cette disposition n'est possible que pour les pistons de grande taille et ne peut pas être appliquée aux robinets utilisant un piston plus petit, car on ne dispose pas de la place nécessaire pour loger le dispositif autonettoyant, sauf à le placer au centre du piston mai, ainsi disposé, le dispositif autonettoyant occupe l'emplacement du clapet de décharge.

Le problème posé consiste à réaliser un robinet temporisé à commande directe manuelle comportant un clapet de décharge et un orifice calibré de temporisation.

Selon l'invention, l'orifice calibré est situé sur la tête du clapet de décharge qui comporte un joint à lèvre interdisant à l'eau sous pression de pénétrer dans la chambre de temporisation autrement qu'en empruntant ledit orifice calibré.

La présente sera mieux comprise par la description qui va suivre faite en se référant aux dessins annexés à titre d'exemple indicatif, seulement, sur lesquels :
- la figure 1 est une vue en coupe d'un robinet conforme à l'invention ;
- la figure 2 est une vue à plus grande échelle du détail A de la figure 1, montrant la position des pièces mobiles lors de la phase de décharge ;
- la figure 3 est une vue, analogue à celle 2, montrant la position des pièces mobiles durant l'ouverture du robinet.

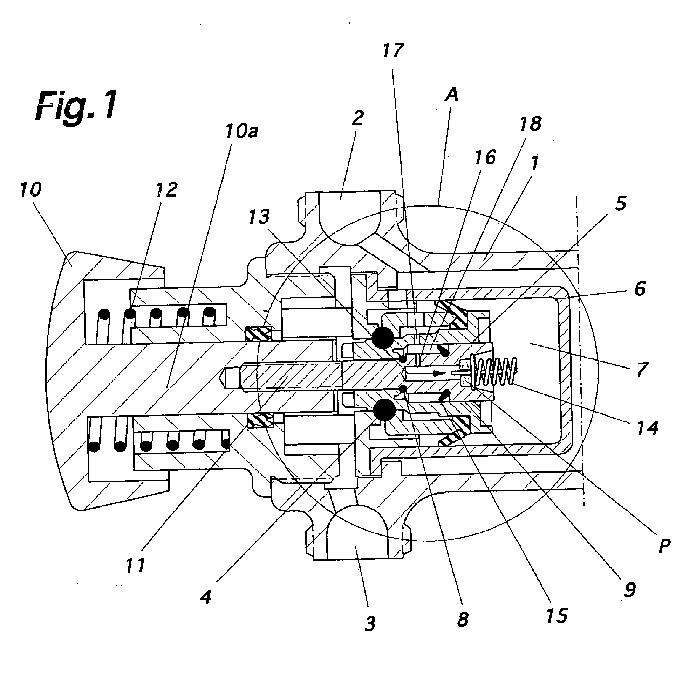

En se reportant à la figure 1, on voit que, de la façon connue, le robinet comporte un corps 1, comportant une arrivée d'eau 2 et une sortie 3, sur lequel se visse une cartouche comportant le clapet principal 4 et tous ies organes mobiles.

De la façon connue, le clapet 4 est porté par un piston 5 délimitant avec un pot 6, une chambre de temporisation 7. L'arrivée d'eau 2 communique avec la chambre 7 par l'entremise d'un orifice calibré pratiqué, de préférence, sur une pastille P, en rubis synthétique, partiellement obturée par le fil usuel (la pastille P est décrite dans le brevet européen publié sous le N° 333526).

De la façon connue, le piston 5 comporte le siège d'un clapet de décharge 8 disposé selon l'axe du piston 5 et porté par une tête 9 reliée rigidement au bouton-poussoir 10 par l'entremise d'une queue 11 traversant librement ledit piston. Le bouton-poussoir est soumis à l'action d'un ressort de rappel 12.

Selon l'invention, l'orifice de temporisation 13, pratiquée sur la pastille P, et son dispositif autonettoyant 14 sont portés par la tête 9 qui présente un joint à lèvre 15 faisant office d'anti-retour, ledit joint s'opposant à la pénétration de l'eau dans la chambre 7, sans toutefois s'opposer à la sortie de l'eau contenue dans ladite chambre lorsque la tête est déplacée sous l'action du bouton-poussoir 10.

L'orifice 16, permettant à l'eau d'atteindre l'orifice 13, est situé entre le clapet de décharge 8 et le joint 15. L'eau sous pression provenant de l'arrivée 2 parvient à l'orifice 16 par l'entremise d'un orifice 17 pratiqué dans le piston 5.

Lorsque l'utilisateur enfonce le poussoir 10, il provoque le soulèvement du clapet 8, une partie de l'eau contenue dans la chambre 7 traverse le joint 15 et est évacuée par le siège 8a du clapet et l'espace annulaire ménagé entre le piston 5 et la queue 11. Simultanément, la pression dans la chambre 7 s'écroule, plus rien ne s'opposant alors au déplacement du piston 5 pour soulever le clapet principal 4.

Comme cela a été décrit, ci-dessus, l'orifice de décharge est constitué par l'espace annulaire ménagé entre le piston 5 et la queue 11. Si la section de l'orifice 17 est trop importante par rapport à celle de l'orifice de décharge, la pression dans la chambre 18, située en arrière du joint 15, ne chute pas et l'eau contenue dans la chambre 7 ne peut pas s'échapper car ladite pression bloque ledit joint.

Selon l'invention, il faut donc que la section de l'orifice 17 soit bien inférieure à celle de l'orifice de décharge. Un bon résultat peut être obtenu si la section de l'orifice 17 est, environ, cinq fois moins importante que celle de l'orifice de décharge. Naturellement, la section de l'orifice 17 reste importante devant celle de l'orifice de temporisation 13.

La valeur du déplacement axial de la tête 9 par rapport au piston 5 est faible : elle doit être suffisante pour permettre le soulèvement du clapet 8 et elle est limitée par la distance séparant, en position de fermeture, l'extrémité de la tige centrale 10a du poussoir et le piston 5.

Lorsque l'extrémité précitée est en contact avec le piston, la force à mettre en oeuvre pour achever la vidange de la chambre 7 est limitée à celle nécessaire pour vaincre l'action du ressort de rappel 12.

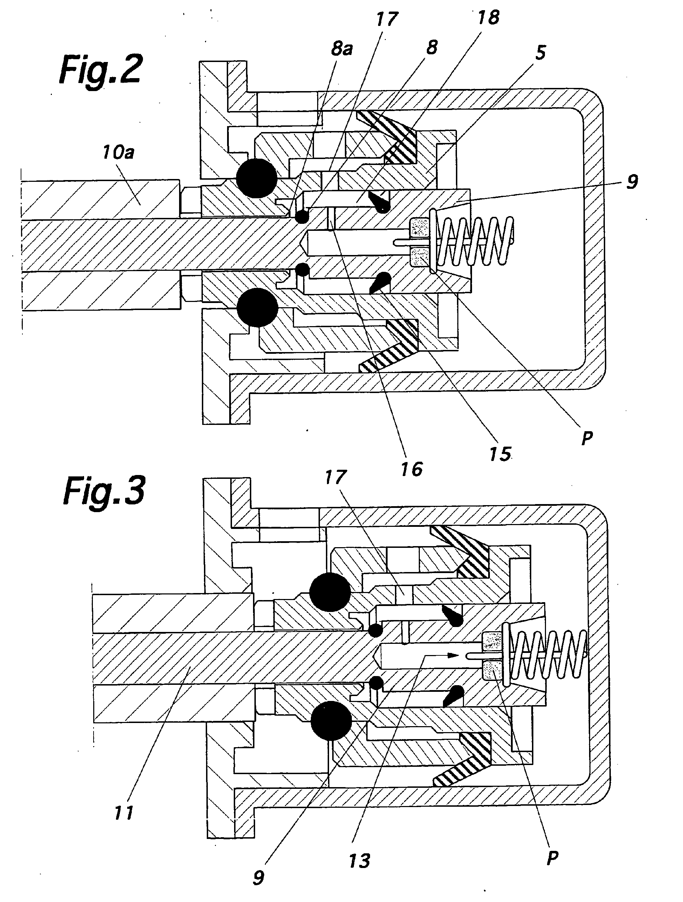

Lorsque l'utilisateur relâche le poussoir, les éléments mobiles étant sensiblement dans la position représentée sur la figure 3, le ressort 12 se détend et entraîne l'ensemble 9-11 en appliquant le clapet 8 contre son siège, la chambre de temporisation est mise en dépression et l'eau pénètre dans cette dernière par l'entremise de l'orifice 13 : la temporisation commence et s'achève par la fermeture du robinet quand le clapet 4 vient reposer contre son siège.

## Revendications

1. Robinet temporisé à commande directe manuelle comportant un clapet principal (4), porté par un piston (5), le piston (5) comportant le siège d'un clapet de décharge (8), une chambre de temporisation (7) communiquant avec l'arrivée d'eau par l'entremise d'un orifice calibré (13) pourvu d'un dispositif de nettoyage (14), **caractérisé en ce que** l'orifice calibré (13) et son dispositif de nettoyage (14) sont situés sur une tête (9) portant le clapet de décharge (8), ladite tête (9) comportant un joint à lèvre (15) interdisant a l'eau de pénétrer dans la chambre de temporisation (7) autrement qu'en empruntant ledit orifice calibré (13).

2. Robinet selon la revendication 1, **caractérisé en ce que** l'orifice calibré (13) est disposé axialement sur la tête (9) comportant le clapet de décharge (8).

3. Robinet selon l'une des revendications 1 et 2, **caractérisé en ce que** l'eau accède à l'orifice calibré par un passage situé sur la tête (9) en un point disposé entre le clapet de décharge et le joint à lèvre (15).

4. Robinet selon l'une des revendications 1 à 3, **caractérisé en ce que** le déplacement de la tête (9) par rapport au piston (5) est limité à une valeur juste suffisante pour provoquer le soulèvement du clapet de décharge.

5. Robinet selon l'une des revendications 1 à 4 **caractérisé en ce que** la section de l'orifice (17), permettant à l'eau de parvenir à l'orifice calibré en traversant l'orifice (16) de la tête (9), est bien inférieure à la section de l'orifice de décharge formé par l'espace annulaire ménagé entre le piston (5) et ta queue (11) de ta tête (9).

6. Robinet selon la revendication 5, **caractérisé en ce que** le rapport entre la section de l'orifice (17) et celle de l'orifice de décharge est, sensiblement, de l'ordre de un à cinq.

## Claims

1. - A directly hand-operated time delay tap including a main valve (4) carried by a piston (5), said piston (5) including the seat of a flow valve (8), a time delay chamber (7) communicating with the water intake through a gauged orifice (13) provided with a cleaning device (14), **characterized in that** the gauged orifice (13) and its cleaning device (14) are located on a head (9) carrying the flow valve (8), said head (9) including a lip seal (15) preventing water from flowing into the time delay chamber (7) through another way than said gauged orifice (13).

2. - A tap according to claim 1, **characterized in that** the gauged orifice (13) is positioned axially on the head (9) including the flow valve (8).

3. - A tap according one of claims 1 to 2, **characterized in that** water reaches the gauged orifice (13) through a passage located on the head (9) at a point positioned between the flow valve (8) and the lip seal (15).

4. - A tap according to one of claims 1 to 3, **characterized in that** the displacement of the head (9) with respect to the piston (5) is limited to a value just sufficient to cause the lifting of the flow valve (8).

5. - A tap according to one of claims 1 to 4, **characterized in that** the orifice (17) section allowing water to reach the gauged orifice (13) through the orifice (16) of the head (9) is much smaller than the section of the flow valve (8) formed by the annular space arranged between the piston (5) and the shank (11) of the head (9).

6. - A tap according to claim 5, **characterized in that** the ratio of the orifice (17) section to that of the flow valve (8) is substantially of the order of one to five.

## Patentansprüche

1. - Verzögerter Hahn mit direkter manueller Bedienung, der eine Hauptklappe (4) umfaßt, die von einem Kolben (5) getragen wird, wobei der Kolben (5) den Sitz eines Ausflußventils (8) umfaßt, eine Verzögerungskammer (7), die mit dem Wassereinlaß über eine kalibrierte Öffnung (13) in Verbindung steht, die mit einer Reinigungsvorrichtung (14) versehen ist, **dadurch gekennzeichnet, daß** sich die kalibrierte Öffnung (13) und ihre Reinigungsvorrichtung (14) auf einem Kopf (9) befinden, der das Ausflußventil (8) trägt, wobei der besagte Kopf (9) eine Lippendichtung (15) umfaßt, die verhindert, daß das Wasser auf anderem Wege in die Verzögerungskammer (7) eindringt, als durch die besagte kalibrierte Öffnung (13).

2. - Hahn nach Anspruch 1, **dadurch gekennzeichnet, daß** die kalibrierte Öffnung (13) axial auf dem Kopf (9) angeordnet ist, der das Ausflußventil (8) trägt.

3. - Hahn nach einem der Ansprüche 1 und 2, **dadurch gekennzeichnet, daß** das Wasser durch einen Übergang zur kalibrierten Öffnung gelangt, der sich auf dem Kopf (9) an einem zwischen dem Ausflußventil und der Lippendichtung (15) angeordneten Punkt befindet.

4. - Hahn nach einem der Ansprüche 1 bis 3, **dadurch gekennzeichnet, daß** die Verschiebung des Kopfes (9) im Verhältnis zum Kolben (5) auf einen Wert begrenzt ist, der gerade ausreicht, um das Anheben des Ausflußventils auszulösen.

5. - Hahn nach einem der Ansprüche 1 bis 4, **dadurch gekennzeichnet, daß** der Querschnitt der Öffnung (17), die zuläßt, daß das Wasser zur kalibrierten Öffnung gelangt, indem es die Öffnung (16) des Kopfes (9) durchquert, viel kleiner als der Querschnitt der Ausflußöffnung ist, die vom ringförmigen Raum gebildet wird, der zwischen dem Kolben (5) und dem Endstück (11) des Kopfes (9) gestaltet ist.

6. - Hahn nach Anspruch 5, **dadurch gekennzeichnet, daß** das Verhältnis zwischen dem Querschnitt der Öffnung (17) und demjenigen der Ausflußöffnung deutlich eins zu fünf beträgt.
